# EUROPEAN PATENT SPECIFICATION

(11) **EP 3 431 349 B1**
(45) Date of publication and mention of the grant of the patent: **23.09.2020**
(21) Application number: 18184259.2
(22) Date of filing: 18.07.2018
(51) Int. Cl.: B60R 22/36, B60R 22/34, B60R 22/28

(54) **TWIN SHOULDER STRAP HARNESS RETRACTOR ASSEMBLY**
GURTAUFROLLER FÜR EIN GURTWERK MIT ZWEI SCHULTERGURTE
ENROULEUR POUR HARNAIS COMPORTANT DEUX BAUDRIERS

(30) Priority: 21.07.2017 GB 201711751
(43) Date of publication of application: 23.01.2019
(73) Proprietor: Nissan Motor Manufacturing (UK) Ltd, Bedford Bedfordshire MK43 0DB (GB)
(72) Inventor: BLACK, Christian, Bedford, Bedfordshire MK43 0DB (GB)

(56) References cited:
- JP-A- 2011 005 989
- US-A1- 2005 082 815
- US-B1- 6 682 009
- US-B2- 6 773 075

## Description

### Technical Field of the Invention

The present invention relates to a retractor assembly for a vehicle safety harness having twin shoulder straps; and to an occupant restraint system having such a retractor assembly. The invention also relates to a vehicle, such as an automobile, incorporating such a retractor assembly or occupant restraint system.

### Background to the Invention

Seat belts are commonly used for restraining an occupant in an automobile seat, securing them from harmful movement in the event the vehicle is subject to sudden deceleration as might occur in an impact. Most modern vehicles are fitted with three-point seat belts, which have a lap belt; and a single shoulder strap for retraining the occupant's upper torso. Where a three-point seatbelt is fitted, it is common for the seatbelt to incorporate an emergency locking retractor. An emergency locking retractor allows the shoulder strap to be payed-out under normal conditions to allow the occupant free movement of the upper torso; but locks in an emergency situation such as an impact or vehicle rollover, thereby limiting occupant movement. This is commonly achieved via the shoulder strap being wound onto a spring-loaded webbing spool in a retractor which incorporates an inertial locking mechanism.

Emergency locking retractors are commonly described as either single sensitivity or multiple sensitivity. A single sensitivity emergency locking retractor integrates an inertial locking mechanism which is actuated by high vehicle deceleration, typically this is sensed by movement of a pendulum or ball bearing. Multiple sensitivity emergency locking retractors integrate an inertial locking mechanism which is actuated by a combination of high vehicle deceleration, rapid webbing extraction or any other automatic means. Rapid webbing extraction is typically sensed by a centrifugal pawl or clutch. It is also known for seat belts to be provided with at least one pre-tensioner which tightens the belt during the early phase of an impact.

Whilst three-point seat belts are highly effective, increasingly tight and sometimes contradictory occupant safety regulations, performance targets and independent protocol requirements are leading motor vehicle manufacturers to consider alternative harness arrangements, including harnesses which have twin shoulder straps.

One of the concerns driving this is the need to meet increasingly tight limits for forward displacement of an occupant's torso while reducing occupant chest deflection. In order to limit forward displacement of an occupant's torso, the shoulder strap applies a force to the occupant's chest to restrain it, which can give rise to chest deflection. Limiting forward displacement of an occupant's torso is critical to optimising airbag performance; and to reducing the risk of the occupant contacting hard points within the vehicle. Limiting chest deflection is critical to reducing the risk of internal injuries, thereby increasing the protection afforded to the occupant.

As the limits on the amount of forward displacement and the amount of chest deflection permitted become stricter, it is becoming increasingly difficult to meet both requirements using a single shoulder strap. This problem can be addressed by using a harness with twin shoulder straps, so that the webbing area acting on the occupant's torso is increased; and therefore, the force applied by the harness to the occupant's chest is spread over a larger area, thus reducing chest deflection for a given load. However, in certain circumstances the load exerted on the occupant's chest may not be evenly distributed through both shoulder straps. For example, when a vehicle is subject to a frontal impact offset from the centre line of the vehicle, the occupant may be displaced forward relative to the vehicle with their torso twisting to one side. This can lead to one of the shoulder straps taking the majority of the load, reducing the effectiveness of a twin shoulder strap harness in spreading the load. Document US 6 682 009 B1 discloses a retractor assembly for such a twin shoulder strap harness, the retractor assembly comprising a load distribution mechanism having an intermediate shaft, a first webbing spool for a first of the shoulder straps and a second webbing spool for a second of the shoulder straps, the first and second webbing spools being located on opposite sides of the load distribution mechanism, each webbing spool being rotatably mounted to and drivingly coupled to the intermediate shaft, a locking mechanism for selectively coupling a respective one of the first and second webbing spools to the intermediate shaft, the load distribution mechanism having a load regulator operative on the intermediate shaft to apply load-limiting. The drawback of this invention is that no mechanism is provided to dynamically distribute load between the shoulder straps. This negates the benefit of having twin shoulder straps.

It would be desirable then, to provide a twin shoulder strap harness system for an automobile seat in which the load is distributed more evenly between the shoulder straps.

It is an objective of the present invention to provide a retractor assembly for a twin shoulder strap harness which overcomes, or at least mitigates, the drawbacks of known twin shoulder strap retractor assemblies. It is a further objective of the present invention to provide a retractor assembly for a twin shoulder strap harness which distributes the load between the shoulder straps more evenly than the known twin shoulder strap retractor assemblies.

It is a still further objective of the present invention to provide a twin shoulder strap harness which overcomes, or at least mitigates, the drawbacks of known twin shoulder strap harnesses. It is a yet further objective of the present invention to provide a twin shoulder strap harness in which the load is distributed between the shoulder straps more evenly than in known twin shoulder strap harnesses.

### Summary of the Invention

According to a first aspect of the invention, there is provided a retractor assembly for a twin shoulder strap harness, the retractor assembly comprising a load distribution mechanism having an intermediate shaft, a first webbing spool for a first of the shoulder straps and a second webbing spool for a second of the shoulder straps, the first and second webbing spools being located on opposite sides of the load distribution mechanism, each webbing spool being rotatably mounted and drivingly coupled to the intermediate shaft through a respective first load-limiter to provide vehicle occupant restraint in use, and at least one locking mechanism for selectively coupling a respective one of the first and second webbing spools to the intermediate shaft, the load distribution mechanism having a load regulator operative on the intermediate shaft to apply at least one of the following load regulation functions:
a. pre-tensioning;
b. further load-limiting;
c. webbing pay-out limiting; and/or
d. active seatbelt control.

In an embodiment, the retractor assembly comprises two said locking mechanisms, each locking mechanism configured for selectively coupling a respective one of the first and second webbing spools to the intermediate shaft. In an alternative embodiment, the retractor assembly has a single said locking mechanism for selectively coupling one of the first and second webbing spools to the intermediate shaft, the other webbing spool being permanently coupled to the intermediate shaft.

The, or each, locking mechanism may be an inertial locking mechanism.

The load regulator may comprise a pre-tensioner operative on the intermediate shaft. The pre-tensioner may be a mechanical or a pyrotechnic pre-tensioner.

The load regulator may comprise a further load-limiter operative on the intermediate shaft. The further load-limiter may be configured to provide progressive, digressive and/or adaptive load limiting.

The load regulator may comprise a webbing pay-out limiter configured in use to regulate rotation of the intermediate shaft to limit webbing pay-out from both webbing spools to a predetermined rate and/or distance.

The load regulator may comprise an electric motor/actuator operative to rotate the intermediate shaft under the control of an electronic control system programmed to provide one or more active seat belt functions. The active seat belt functions may be selected from the group comprising: pre-crash webbing retraction, haptic warning, dynamic driving support, and automatic webbing parking.

In an embodiment, each first load-limiter comprises a torsion bar in the driveline between the respective webbing spool and the intermediate shaft. Each webbing spool may be connected rotationally fast to a first end of its respective torsion bar load-limiter and said at least one locking mechanism may be operative to selectively couple a second end of a respective one of the torsion bar load-limiters to the intermediate shaft. Where the retractor assembly has two locking mechanisms, each of the locking mechanisms may be operative to selectively couple a second end of a respective one of the torsion bar load-limiters to the intermediate shaft. Alternatively, where the retractor assembly has a single locking mechanism, said locking mechanism may be operative to selectively couple a second end of one of the torsion bar load limiters to the intermediate shaft; and the second end of the other torsion bar load limiter may be permanently coupled to the intermediate shaft.

In accordance with a second aspect of the invention, there is provided an occupant restraint harness for an automobile seat comprising a retractor assembly in accordance with the first aspect of the invention and first and second flexible shoulder straps, an end region of each of the first and second shoulder straps being connected to a respective one of the first and second webbing spools.

In accordance with a third aspect of the invention, there is provided a vehicle having a retractor assembly for a twin shoulder strap harness in accordance with the first aspect of the invention or an occupant restraint harness in accordance with the second aspect of the invention.

### Detailed Description of the Invention

In order that the invention may be more clearly understood an embodiment thereof will now be described, by way of example only, with reference to the accompanying drawings, of which:
- Figure 1: is a perspective view of the front of a vehicle occupant in an automobile seat illustrating use of a prior art three-point seat belt having a single shoulder strap;
- Figure 2: is a schematic plan view from above of a known Offset-Deformable Barrier crash test used to simulate a frontal impact between two vehicles laterally off-set from one another, the Figure showing the crash test vehicle prior to impact with the barrier and an occupant of the crash test vehicle wearing a conventional three point seat belt with a single shoulder strap;
- Figure 3a: is a view similar to that of Figure 2 but showing the crash test vehicle and barrier during impact at the moment of peak occupant torso loading;
- Figure 3b: is a schematic view from above of an occupant of the crash test vehicle in Figure 3a, but wearing a conventional four point harness with two shoulder straps;
- Figure 4: is a schematic view from the front of an embodiment of a retractor assembly in accordance with an aspect of the invention for use with a harness having twin shoulder straps in accordance with a further aspect of the invention;
- Figure 5: is a schematic view from the side of a vehicle seat showing the retractor assembly of Figure 4 mounted to the seat; and
- Figures 6 to 9: are a series of schematic views from the front of a vehicle occupant in an automobile seat illustrating a range of different harness configurations having twin shoulder straps and which can be used with the retractor of Figure 4.

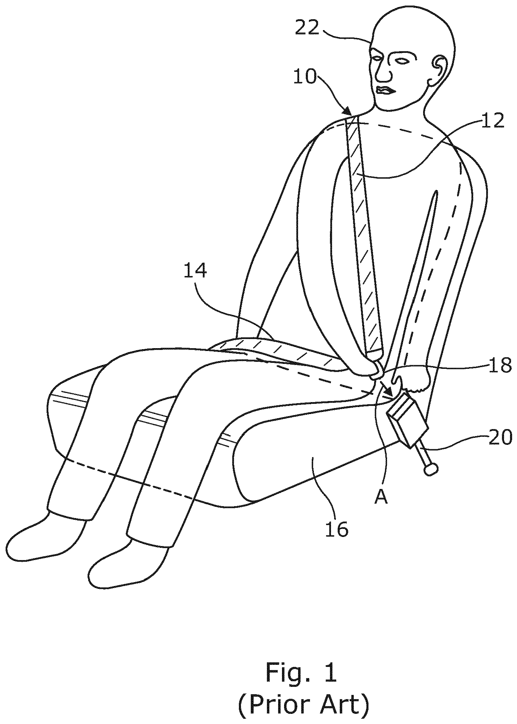

**Figure 1** illustrates a conventional prior art three point seat belt or harness 10 having a single shoulder strap 12 and a lap belt 14. The shoulder strap 12 and the lap belt 14 are part of a single continuous length of webbing, one end of which is anchored to the vehicle body adjacent the seat 16 at an end of the lap belt 14 and the other end of which is wound onto a spool forming part of a conventional emergency locking retractor assembly (not shown) connected to the upper end of the shoulder strap 12. The retractor assembly is secured to the vehicle body (often at the lower end of a B pillar for a belt for a front seat); or to the seat back in a known manner. A tongue 18 is slidably mounted to the webbing and locates at the junction between the shoulder strap and the lap belt portions of the webbing. The tongue 18 is engaged in a buckle 20 mounted to the seat frame, as indicated by arrow A, to secure the seat belt about an occupant 22 of the seat 16 in a known manner. The single shoulder strap portion 12 provides a limited surface area in contact with the occupant's chest through which the force required to restrain them from moving forwardly away from the seat during an impact is applied.

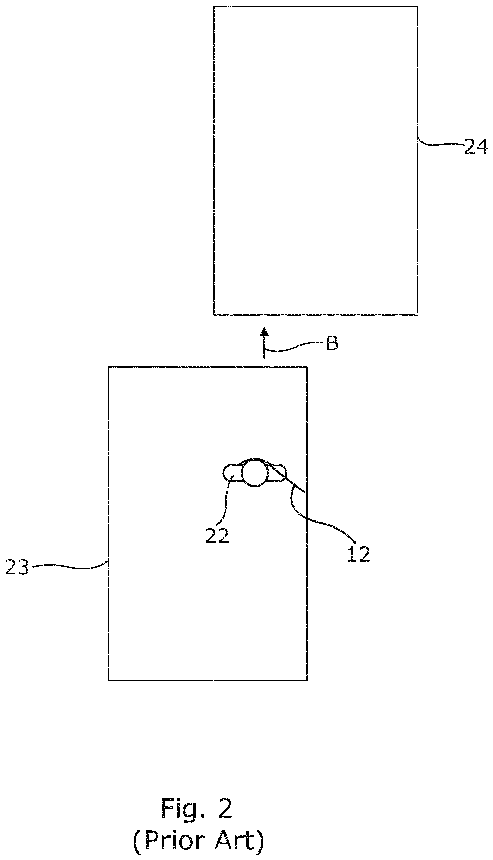

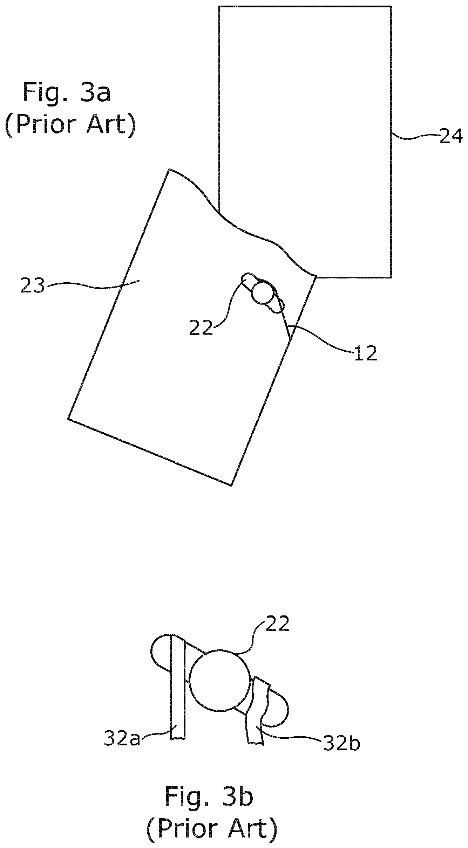

**Figures 2** **and** **3a** are schematic plan views of a known Offset-Deformable Barrier crash test used to simulate a frontal impact between two vehicles laterally offset from one another. Figure 2 shows the crash test vehicle 23 prior to impact with the barrier 24, the direction of movement of the crash test vehicle being indicated by arrow B. Figure 3a shows the crash test vehicle and barrier during impact at the point of peak occupant torso loading. In both figures 2 and 3a, an occupant 22 of the crash test vehicle 23 is shown wearing a conventional three point seat belt with a single shoulder strap 12. In Figure 3a, it can be seen how the occupant 22 is thrown forward during the impact and that their torso is twisted to the right. This is due to the off-set impact forces and due to the fact that the shoulder strap 12 - which passes over their right shoulder - does not restrain their left shoulder, so that the shoulder strap 12 acts as a pivot point for the upper torso. **Figure 3b** illustrates the occupant 22 of the crash test vehicle 23 in Figure 3a but wearing a conventional four point harness having twin shoulder straps 32a, 32b. The use of twin shoulder straps 32a, 32b is advantageous in these circumstances as it restrains both shoulders. However, due to the nature of the impact which twists the occupant's torso to the right, the majority of the load is taken through the left shoulder strap 32a, with little of the load being taken through the right strap 32b. This uneven load distribution between the shoulder straps negates one of the major advantages of using a harness with twin shoulder straps in spreading the load to reduce chest deflection.

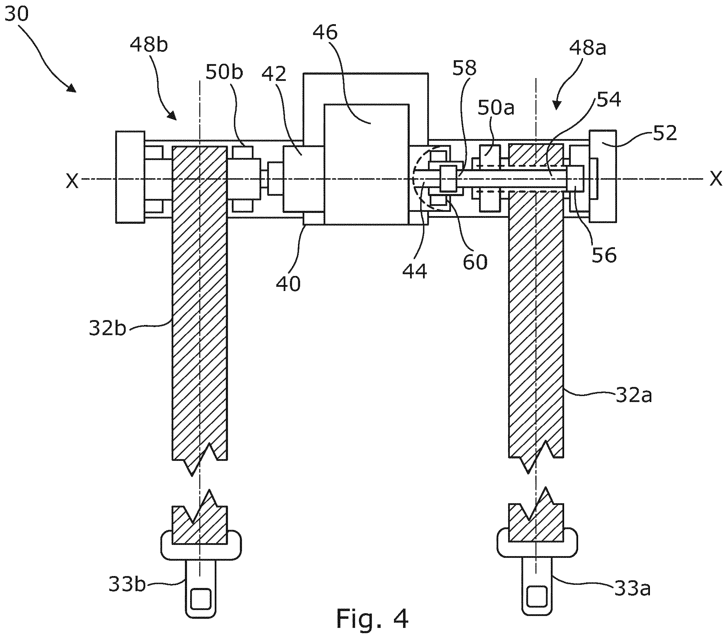

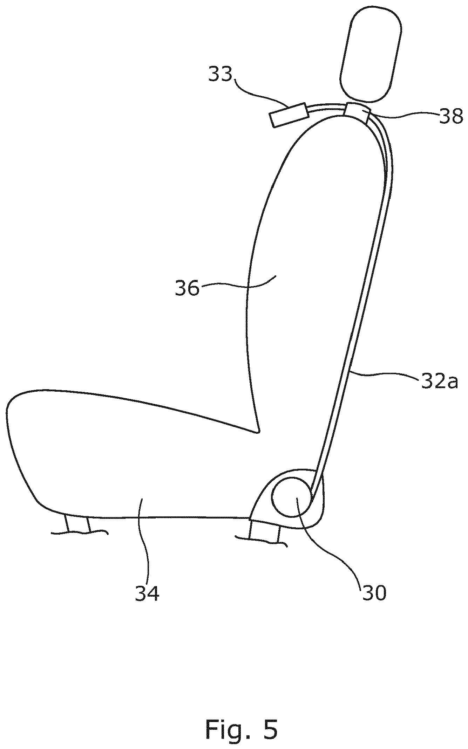

**Figure 4** illustrates an embodiment of a retractor assembly 30 for use with a seatbelt harness having twin shoulder straps 32a, 32b in accordance with an aspect of the invention. The retractor assembly 30 is configured to address the above issue by dynamically distributing the load between both shoulder straps when a vehicle occupant is restrained. In the embodiment illustrated in Figure 4, each shoulder strap has a tongue 33b, 33a for engagement with a buckle at a free end. However, this need not be the case with other harness arrangements. The retractor assembly 30 is usually mounted behind a vehicle seat so that the shoulder straps pass over the top of the seatback and can be drawn down in front of the torso of an occupant 22 of the seat in the usual way. As illustrated in **Figure 5****,** the retractor assembly 30 can be mounted to the seat 34 itself. In the embodiment as shown, the retractor assembly 30 is mounted to a lower portion of the seat towards the rear so that the shoulder straps 32a, 32b pass up the rear of the seat backrest 36 (usually inside the seat cover), over the top of the seat back through webbing guides 38, and hang down in front of the seat backrest 36. However, the retractor assembly 30 could be mounted elsewhere on the seat, say towards the upper end of the seat backrest 36. Alternatively, the retractor assembly could be mounted to another part of the vehicle behind the seat 34.

Referring again to Figure 4, the retractor assembly 30 includes a frame (indicated generally at 40) in which a load distribution mechanism 42 is mounted. The load distribution mechanism 42 includes an intermediate shaft 44 having an axis X-X aligned across the occupant's torso. The load distribution mechanism 42 has a load regulator 46 operative on the intermediate shaft 44.

A pair of webbing spool sub-assemblies 48a, 48b are located one on either side of the load distribution mechanism 42. Each webbing spool sub-assembly includes a webbing spool 50a, 50b mounted for rotation about an axis which is coincident with the axis X-X of the intermediate shaft 44. An end region of each of the first and second shoulder straps 32a, 32b is wound on to a respective one of the webbing spools 50a, 50b; each of which can rotate in a webbing pay-out direction and a webbing retraction direction under normal conditions. For convenience, the webbing spools will be referred to as a first webbing spool 50a associated with the first shoulder strap 32a and a second webbing spool 50b associated with the second shoulder strap 32b. Each webbing spool sub-assembly 48a, 48b incorporates a means for operatively connecting the respective webbing spool 50a, 50b to the intermediate shaft 44 in order to restrain a vehicle occupant in an emergency situation. The two webbing spool subassemblies 48a, 48b are substantially the same (though a mirror image of one another) and accordingly only details of the first webbing spool sub-assembly 48a will be described.

The first webbing spool sub-assembly 48a includes the first webbing spool 50a and a spring cassette 52 for applying a biasing force to rotate the spool 50a in the webbing retraction direction. Under normal conditions, the spring cassette 52 applies a moderate torque to the spool 50a; retracting the webbing to reduce slack, to provide some resistance to occupant movement, and to fully retract the webbing when the seat belt harness is disengaged and not in use. The webbing can be pulled off the spool 50a by applying a moderate force against the biasing force to rotate the spool in the webbing pay-out direction when putting the seat belt on; and to allow some freedom of movement of the occupant in the seat.

The webbing spool 50a is hollow and a torsion bar force-limiter 54 extends coaxially through the centre of the spool. The torsion bar 54 is fixed rotationally fast with the spool 50a at a first end 56, whilst the second end 58 of the torsion bar extends axially out of the spool towards the intermediate shaft 44. A locking mechanism 60 is operative between the second end 58 of the torsion bar and the intermediate shaft 44 to selectively lock them together to restrain a vehicle occupant. The locking mechanism 60 can be of any suitable type as are well known in the art. In an embodiment, the locking mechanism 60 is a so called "multiple sensitivity" inertial locking mechanism which is activated in response to a high G manoeuvre of the vehicle (e.g. rapid deceleration or rollover); or by rapid acceleration of the shoulder strap; or a combination of the two. For example, the locking mechanism 60 can be a mechanical, inertial locking mechanism having a clutch mechanism. When actuated, the clutch locks the second end 58 of the torsion bar to the intermediate shaft 44 to prevent the second end 58 of torsion bar from rotating relative to the intermediate shaft, at least in the webbing pay-out direction. However, other suitable locking mechanisms could be used; including mechanisms that are electronically actuated by a control system in response to inputs from sensors for detecting vehicle deceleration, and/or rollover or other high G manoeuvres which are deemed to require the vehicle occupants to be restrained by the harness.

The second webbing spool subassembly 48b is functionally identical to the first webbing spool sub-assembly 48a as described above.

Under normal conditions, the locking mechanisms 60 are disengaged; allowing for independent rotation of the first and second webbing spools 50a, 50b in both webbing pay-out and webbing retraction directions.

In the event of a vehicle impact or other emergency situation, the locking mechanisms 60 engage to fix both torsion bar load-limiters 54 to the intermediate shaft 44. This operatively locks the torsion bar load-limiters 54 together via the intermediate shaft 44. Differences in webbing pay-out between the first and second webbing spools 50a, 50b are controlled by angular deflection of the torsion bar load-limiters in response to differing loads applied through the first and second shoulder straps 32a, 32b. This dynamically distributes the load between the two shoulder straps. For example, in the situation as illustrated in Figure 3b, the greater load initially applied to the first shoulder strap 32a on the left would result in the torsion bar load-limiter 54 on that side twisting by a greater angle than the torsion bar load-limiter 54 on the right-hand side. This allows more webbing to pay-out from the first spool 50a than from the second spool 50b so that the second shoulder strap 32b on the right takes up more of the load until the load is evenly distributed between the two shoulder straps.

Whilst the separate torsion bar load-limiters 54 in the two webbing spool sub-assemblies 48a, 48b allow for differential load regulation between the two shoulder straps, the load distribution assembly 42 is configured to equally distribute torsional load from the load regulator 46 to both webbing spool sub-assemblies 48a, 48b.

The load regulator 46 is operative on the intermediate shaft 44 to apply one or more of the following known load regulation technologies:
a. pre-tensioning;
b. further load-limiting;
c. webbing pay-out limiting;
d. active seatbelt control.

Generally speaking, the intermediate shaft 44 is held rotationally stationary in the load distribution mechanism 42 in order to restrain a vehicle occupant when the locking mechanisms 60 are engaged. The method of holding the intermediate shaft stationary is dependent on which combination of load regulation technologies are applied. However, the load regulator 46 is able to apply a torque to the intermediate shaft in order to implement one or more of the above known load regulation technologies. Because the load regulator acts on the intermediate shaft 44, the torque applied by the load regulator is evenly distributed to the torsion bar load-limiters 54 on either side. However, during an impact, each of the torsion bar load-limiters 54 will angularly deflect proportionally to the torsional load applied to them by the restrained occupant through their respective shoulder straps so that the dynamic load distribution between the two shoulder straps 32a, 32b is maintained, even when the load regulator is operative. The various load regulation technologies will be discussed briefly in turn.

### Pre-tensioning

The load regulator 46 may incorporate a pre-tensioner which rotates the intermediate shaft 44 in a webbing retraction direction in order to take up any slack in the harness and pull the occupant firmly into the seat during the early phase of an impact as detected by one or more sensors. Following operation of the pre-tensioner, the intermediate shaft 44 may be rotationally fixed relative to the frame 40.

The pre-tensioner may be a pyrotechnic or mechanical pre-tensioner and the system may be configured to apply a number of pre-tensioning stages. Pre-tensioner technology for seatbelts is well known and the person skilled in the art will be able to adapt the known technology for use in the load regulator without difficultly.

The torsional load from the pre-tensioner is evenly distributed to the torsion bar load-limiters 54 on either side through the intermediate shaft 44. However, as noted above, the torsion bar load-limiters will angularly deflect proportionally to the torsional load applied to them by the restrained occupant through their respective shoulder straps so that the dynamic load distribution between the two shoulder straps 32a, 32b is maintained during the pre-tensioning phase or phases in a vehicle impact.

### Load-limiting

The load regulator 46 may incorporate a further load-limiter which applies a secondary, evenly distributed load-limiting of both webbing spool sub-assemblies 48a, 48b. The further load-limiter may be configured to provide progressive, digressive or adaptive load limiting in a known manner. Any suitable load-limiter arrangement can be adopted in the load regulator 46, such as those disclosed in US 6, 682, 009 B1 or US 6, 773, 075 B2, for example.

### Webbing pay-out limiting

The load regulator 46 may incorporate a webbing pay-out limiter which permits limited and controlled rotation of the intermediate shaft 44 in the webbing pay-out direction. This limiter can be configured to regulate pay-out of the webbing from both webbing spool sub-assembles 48a, 48b to a predetermined rate or amount to partially limit displacement of the vehicle occupant following engagement of the locking mechanisms 60. Some predetermined forward displacement of the occupant would be controlled by angular deflection of the torsion bar load-limiters 54 in the webbing spool sub-assemblies 48a, 48b.

### Active seatbelt control

The load regulator can incorporate an electric motor or other electronically controllable actuator arranged to rotate the intermediate shaft under the control of an electronic control system. The control system is programmed to operate the motor/actuator in order to carry one or more advanced seatbelt functions including any one or more of the following:
- pre-crash webbing retraction prior to initial impact;
- haptic warning;
- dynamic driving support;
- automatic webbing parking.

For example, in order to provide dynamic driving support, the locking mechanisms 60 are actuated and the intermediate shaft rotated by the electric motor/actuator to vary the tension of the harness. This may involve partially pre-tensioning the harness to better position the occupant 22 in their seat 34. Such dynamic driving support can be activated using data from safety systems in the vehicle, such as electronic stability control and brake assist systems or other dedicated sensors. In this embodiment, the motor/actuator can be used to perform a partial pre-tensioning in an emergency situation, prior to use of a pyrotechnic or mechanical pre-tensioner. This partial pre-tensioning is reversible. If the system is configured to carry out active seat belt functions under normal conditions (e.g. non-impact conditions when the inertial locking mechanism would not usually be actuated), locking mechanisms 60 which are actuated electronically by the control system are used so that they can be selectively engaged to lock the torsion bar load-limiters to the intermediate shaft whilst the active seat belt function is being carried out.

The load regulator 46 can be configured to provide any, all, or some of the load regulation technologies discussed above in any combination.

In an alternative embodiment, only one of the webbing spool sub-assemblies includes a locking mechanism 60 to selectively couple the webbing spool to the intermediate shaft via the torsion bar load-limiter, the other webbing spool being in permanent driving connection with the intermediate shaft which would be free to rotate unless the locking mechanism is actuated. Such an arrangement would reduce costs and weight of the retractor assembly.

The retractor assembly 30 can be used with any suitable harness having twin shoulder straps. This includes, but is not limited to, a four point seat belt harness having two separate shoulder straps and two separate lap belts coupled together at a central lap buckle in a known manner.

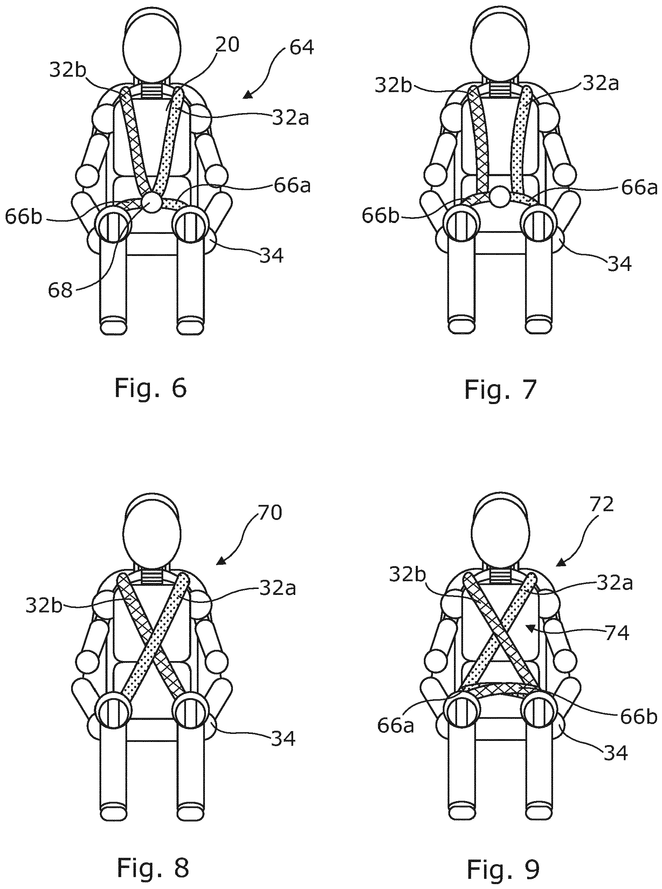

Figures 6 to 9 illustrate figuratively a number of alternative twin shoulder strap harness arrangements which can also be adopted for use with the retractor 30.

**Figure 6** illustrates a simplified four point harness 64 in which the shoulder strap 32a and lap belt 66a on one side, and the shoulder strap 32b and lap belt 66b on the other side, are each defined by a single length of webbing and the two independent webbing lengths are connected together at a central lap buckle 68. **Figure 7** illustrates a variation in which each shoulder strap 32a, 32b is integrated with the lap belt 66a, 66b on its side.

In the embodiment shown in **Figure 8****,** a harness 70 comprises two shoulder straps 32a, 32b which are crossed over the occupant's chest; but no lap belt. Although not shown, the shoulder straps 32a, 32b each have a tongue at their free end which is inserted into a respective buckle attached to the seat frame at one side of the seat 34. In this embodiment, the harness relies on the shoulder straps alone to hold the occupant in position. The seat 34 may be provided with a profiled seat base plate designed to inhibit the occupant from slipping forward on the seat, or a seat cushion airbag - for example, as disclosed in JP04809137B2.

In **Figure 9****,** a harness 72 comprises a three-point seat belt 74 which defines a first shoulder strap 32a and a lap belt 66a together with a second three-point seat belt comprising a second shoulder strap 32b and a second lap belt 66b. The second shoulder strap 32b crosses over the first shoulder strap 32a. Each shoulder strap has a tongue (not shown) at its free end for engagement with a buckle (not shown) at one side of the seat 34.

Figures 6 to 9 are intended only to illustrate examples of a number of possible alternative twin shoulder strap harness arrangements that could be used with a retractor assembly 30 in accordance with an aspect of the invention. Many other twin shoulder strap harness configurations are possible and it should be understood that the invention is not limited to application with any particular harness arrangement unless expressly claimed.

The above embodiments are described by way of example only. Many variations are possible without departing from the scope of the invention as defined in the appended claims. For example, in alternative embodiments, active load limiting functionality and or webbing pay-out limiting functionality can be incorporated in the webbing spool sub-assemblies 48a, 48b. Furthermore, sensors could be optionally incorporated into the webbing spool sub-assemblies 48a, 48b and/or the load distribution mechanism 42 to provide additional data to a vehicle's airbag control unit regarding the status, size and displacement of the occupant. Such sensors could be configured to detect one or more parameters including revolutions, acceleration or torque in relation to the webbing spools, for example.

## Claims

1. A retractor assembly (30) for a twin shoulder strap harness, the retractor assembly comprising a load distribution mechanism (42) having an intermediate shaft (44), a first webbing spool (48a) for a first of the shoulder straps (32a) and a second webbing spool (48b) for a second of the shoulder straps (32b), the first and second webbing spools being located on opposite sides of the load distribution mechanism, each webbing spool (48a, 48b) being rotatably mounted to and drivingly coupled to the intermediate shaft (44) through a respective first load-limiter (54) to provide vehicle occupant restraint in use, and at least one locking mechanism (60) for selectively coupling a respective one of the first and second webbing spools (48a, 48b) to the intermediate shaft, the load distribution mechanism (42) having a load regulator (46) operative on the intermediate shaft (44) to apply at least one of the following load regulation functions:
a. pre-tensioning;
b. further load-limiting;
c. webbing pay-out limiting; and/or
d. active seatbelt control.

2. A retractor assembly (30) as claimed in claim 1, wherein the retractor assembly comprises two said locking mechanisms (60), each locking mechanism configured for selectively coupling a respective one of the first and second webbing spools (48a, 48b) to the intermediate shaft (44).

3. A retractor assembly (30) as claimed in claim 1, wherein the retractor assembly has a single said locking mechanism (60) for selectively coupling one of the first and second webbing spools (48a, 48b) to the intermediate shaft (44), the other webbing spool being permanently coupled to the intermediate shaft.

4. A retractor assembly (30) as claimed in any one of claims 1 to 3, wherein the, or each, locking mechanism (60) is an inertial locking mechanism.

5. A retractor assembly (30) as claimed in any one of the preceding claims,
wherein the load regulator (46) comprises a pre-tensioner operative on the intermediate shaft (44).

6. A retractor assembly (30) as claimed in any one of the preceding claims,
wherein the load regulator (46) has a further load-limiter operative on the intermediate shaft.

7. A retractor assembly (30) as claimed in claim 6, wherein the further load-limiter is configured to provide progressive, digressive and/or adaptive load limiting.

8. A retractor assembly (30) as claimed in any one of the preceding claims,
wherein the load regulator (46) has a webbing pay-out limiter configured in use to regulate rotation of the intermediate shaft (44) to limit webbing pay-out from both webbing spools (48a, 48b) to a predetermined rate and/or distance.

9. A retractor assembly (30) as claimed in any one of the preceding claims,
wherein the load regulator (46) has an electric motor/actuator operative to rotate the intermediate shaft (44) under the control of an electronic control system programmed to provide one or more active seat belt functions selected from the group comprising: pre-crash webbing retraction, haptic warning, dynamic driving support, and automatic webbing parking.

10. A retractor assembly (30) as claimed in any one of the preceding claims,
wherein each first load-limiter comprises a torsion bar (54) in the driveline between the respective webbing spool (48a, 48b) and the intermediate shaft.

11. A retractor assembly (30) as claimed in claim 10, wherein each webbing spool (48a, 48b) is connected rotationally fast to a first end of its respective torsion bar load-limiter (54).

12. A retractor assembly (30) as claimed in claim 11, wherein said at least one locking mechanism (60) is operative to selectively couple a second end of a respective one of the torsion bar load-limiters (54) to the intermediate shaft (44).

13. A retractor assembly (30) as claimed in claim 12 when dependent on claim 2, wherein each of said locking mechanisms (60) is operative to selectively couple a second end of a respective one of the torsion bar load-limiters (54) to the intermediate shaft (44).

14. A retractor assembly (30) as claimed in claim 12 when dependent on claim 3, wherein said locking mechanism (60) is operative to selectively couple a second end of one of the torsion bar load-limiters (54) to the intermediate shaft (44), the second end of the other of the torsion bar-load limiters (54) being permanently coupled to the intermediate shaft (44).

15. An occupant restraint system for an automobile seat comprising a retractor assembly (30) as claimed in any one of the preceding claims and first and second flexible shoulder straps (32a, 32b), an end region of each of the first and second shoulder straps being connected to a respective one of the first and second webbing spool (48a, 48b).

16. A vehicle having a retractor assembly (30) for a twin shoulder strap harness as claimed in any one of claims 1 to 14; or an occupant restraint system as claimed in claim 15.

## Patentansprüche

1. Aufrollanordnung (30) für ein Doppelschultergurtgeschirr, wobei die Aufrollanordnung einen Lastverteilungsmechanismus (42) mit einer Zwischenwelle (44), eine erste Gurtbandspule (48a) für einen ersten der Schultergurte (32a) und eine zweite Gurtbandspule (48b) für einen zweiten der Schultergurte (32b) umfasst, wobei die erste und die zweite Gurtbandspule auf gegenüberliegenden Seiten des Lastverteilungsmechanismus angeordnet sind, wobei jede Gurtbandspule (48a, 48b) durch einen entsprechenden ersten Lastbegrenzer (54) an einer Zwischenwelle (44) drehbar montiert und mit dieser antreibend gekoppelt ist, um im Gebrauch eine Fahrzeuginsassenrückhaltung bereitzustellen, und mindestens einen Verriegelungsmechanismus (60) zum selektiven Koppeln einer entsprechenden ersten oder zweiten Gurtbandspule (48a, 48b) mit der Zwischenwelle umfasst, wobei der Lastverteilungsmechanismus (42) einen auf der Zwischenwelle (44) wirksamen Lastregler (46) aufweist, um mindestens eine der folgenden Lastregelungsfunktionen anzuwenden:
a. Vorspannung;
b. weitere Lastbegrenzung;
c. Auszugsbegrenzung für Gurtbänder; und/oder
d. aktive Sicherheitsgurtkontrolle.

2. Aufrollanordnung (30) nach Anspruch 1, wobei die Aufrollanordnung zwei der Verriegelungsmechanismen (60) umfasst, wobei jeder Verriegelungsmechanismus zum selektiven Koppeln einer entsprechenden ersten oder zweiten Gurtbandspule (48a, 48b) mit der Zwischenwelle (44) konfiguriert ist.

3. Aufrollanordnung (30) nach Anspruch 1, wobei die Aufrollanordnung einen einzelnen Verriegelungsmechanismus (60) zum selektiven Koppeln der ersten oder zweiten Gurtbandspule (48a, 48b) mit der Zwischenwelle (44) aufweist, wobei die andere Gurtbandspule dauerhaft mit der Zwischenwelle verbunden ist.

4. Aufrollanordnung (30) nach einem der Ansprüche 1 bis 3, wobei der oder jeder Verriegelungsmechanismus (60) ein Trägheitsverriegelungsmechanismus ist.

5. Aufrollanordnung (30) nach einem der vorhergehenden Ansprüche, wobei der Lastregler (46) einen Vorspanner umfasst, der auf der Zwischenwelle (44) wirksam ist.

6. Aufrollanordnung (30) nach einem der vorhergehenden Ansprüche, wobei der Lastregler (46) einen weiteren Lastbegrenzer aufweist, der auf der Zwischenwelle wirksam ist.

7. Aufrollanordnung (30) nach Anspruch 6, wobei der weitere Lastbegrenzer dazu konfiguriert ist, eine progressive, degressive und/oder adaptive Lastbegrenzung bereitzustellen.

8. Aufrollanordnung (30) nach einem der vorhergehenden Ansprüche, wobei der Lastregler (46) einen Gurtbandauszugsbegrenzer aufweist, der dazu konfiguriert ist, im Gebrauch die Drehung der Zwischenwelle (44) zu regeln, um den Gurtbandauszug von beiden Gurtbandspulen (48a, 48b) auf eine vorbestimmte Rate und/oder Entfernung zu begrenzen.

9. Aufrollanordnung (30) nach einem der vorhergehenden Ansprüche, wobei der Lastregler (46) einen Elektromotor/Aktuator aufweist, der wirksam ist, um die Zwischenwelle (44) unter der Steuerung eines elektronischen Steuersystems zu drehen, das dazu programmiert ist, um eine oder mehrere aktive Sicherheitsgurtfunktionen bereitzustellen, ausgewählt aus der Gruppe umfassend: Gurtbandaufrollen vor dem Zusammenprall, haptische Warnung, dynamische Fahrunterstützung und automatisches Gurtbandparken.

10. Aufrollanordnung (30) nach einem der vorhergehenden Ansprüche, wobei jeder erste Lastbegrenzer einen Torsionsstab (54) im Antriebsstrang zwischen der jeweiligen Gurtbandspule (48a, 48b) und der Zwischenwelle umfasst.

11. Aufrollanordnung (30) nach Anspruch 10, wobei jede Gurtbandspule (48a, 48b) drehfest mit einem ersten Ende ihres jeweiligen Torsionsstab-Lastbegrenzers (54) verbunden ist.

12. Aufrollanordnung (30) nach Anspruch 11, wobei der mindestens eine Verriegelungsmechanismus (60) wirksam ist, um selektiv ein zweites Ende eines entsprechenden Torsionsstab-Lastbegrenzers (54) mit der Zwischenwelle (44) zu koppeln.

13. Aufrollanordnung (30) nach Anspruch 12 in Abhängigkeit von Anspruch 2, wobei jeder der Verriegelungsmechanismen (60) wirksam ist, um selektiv ein zweites Ende eines entsprechenden Torsionsstab-Lastbegrenzers (54) mit der Zwischenwelle (44) zu koppeln.

14. Aufrollanordnung (30) nach Anspruch 12 in Abhängigkeit von Anspruch 3, wobei der Verriegelungsmechanismus (60) wirksam ist, um ein zweites Ende eines der Torsionsstab-Lastbegrenzer (54) selektiv mit der Zwischenwelle (44) zu koppeln, wobei das zweite Ende des anderen Torsionsstab-Lastbegrenzers (54) dauerhaft mit der Zwischenwelle (44) gekoppelt ist.

15. Insassenrückhaltesystem für einen Automobilsitz, umfassend eine Aufrollanordnung (30), wie in einem der vorhergehenden Ansprüche beansprucht, und erste und zweite flexible Schultergurte (32a, 32b), wobei ein Endbereich des ersten und zweiten Schultergurts mit jeweils einer der ersten und zweiten Gurtbandspule (48a, 48b) verbunden ist.

16. Fahrzeug mit einer Aufrollanordnung (30) für ein Doppelschultergurtgeschirr, wie in einem der Ansprüche 1 bis 14 beansprucht, oder ein Insassenrückhaltesystem nach Anspruch 15.

## Revendications

1. Ensemble rétracteur (30) de harnais de sangle d'épaule double, l'ensemble rétracteur comprenant un mécanisme de répartition de charge (42) comportant un arbre intermédiaire (44), un premier enrouleur de sangle (48a) pour une première des sangles d'épaule (32a) et un second enrouleur de sangle (48b) pour une seconde des sangles d'épaule (32b), les premier et second enrouleurs de sangle étant situés sur des côtés opposés du mécanisme de répartition de charge, chaque enrouleur de sangle (48a, 48b) étant monté à rotation et couplé par entraînement à l'arbre intermédiaire (44) par l'intermédiaire d'un premier limiteur de charge (54) respectif afin de fournir une retenue de l'occupant du véhicule lors de l'utilisation, et au moins un mécanisme de verrouillage (60) destiné à accoupler sélectivement un enrouleur de sangle respectif des premier et second enrouleurs de sangle (48a, 48b) à l'arbre intermédiaire, le mécanisme de répartition de charge (42) comportant un régulateur de charge (46) agissant sur l'arbre intermédiaire (44) pour appliquer au moins l'une des fonctions de régulation de charge suivantes :
a. la prétension ;
b. la limitation de charge supplémentaire ;
c. la limitation de déroulage de sangle ; et/ou
d. le contrôle actif de la ceinture de sécurité.

2. Ensemble rétracteur (30) selon la revendication 1, dans lequel l'ensemble rétracteur comprend deux desdits mécanismes de verrouillage (60), chaque mécanisme de verrouillage étant configuré pour accoupler sélectivement un enrouleur de sangle respectif des premier et second enrouleurs de sangle (48a, 48b) à l'arbre intermédiaire (44).

3. Ensemble rétracteur (30) selon la revendication 1, l'ensemble rétracteur comportant un seul dit mécanisme de verrouillage (60) destiné à accoupler sélectivement un enrouleur de sangle des premier et second enrouleurs de sangle (48a, 48b) à l'arbre intermédiaire (44), l'autre enrouleur de sangle étant accouplé en permanence à l'arbre intermédiaire.

4. Ensemble rétracteur (30) selon l'une quelconque des revendications 1 à 3, dans lequel le, ou chaque mécanisme de verrouillage (60) est un mécanisme de verrouillage inertiel.

5. Ensemble rétracteur (30) selon l'une quelconque des revendications précédentes, dans lequel le régulateur de charge (46) comprend un prétensionneur agissant sur l'arbre intermédiaire (44).

6. Ensemble rétracteur (30) selon l'une quelconque des revendications précédentes, dans lequel le régulateur de charge (46) comporte un autre limiteur de charge agissant sur l'arbre intermédiaire.

7. Ensemble rétracteur (30) selon la revendication 6, dans lequel l'autre limiteur de charge est configuré pour fournir une limitation de charge progressive, dégressive et/ou adaptative.

8. Ensemble rétracteur (30) selon l'une quelconque des revendications précédentes, dans lequel le régulateur de charge (46) comporte un limiteur de déroulage de sangle configuré, lors de l'utilisation, pour réguler la rotation de l'arbre intermédiaire (44) afin de limiter le déroulage de la sangle à partir des deux enrouleurs de sangle (48a, 48b) à une vitesse et/ou une distance prédéfinies.

9. Ensemble rétracteur (30) selon l'une quelconque des revendications précédentes, dans lequel le régulateur de charge (46) comporte un moteur/actionneur électrique fonctionnant pour faire tourner l'arbre intermédiaire (44) sous la commande d'un système de commande électronique programmé pour fournir une ou plusieurs fonctions de ceinture de sécurité actives choisies dans le groupe constitué par : la rétraction de sangle avant collision, l'avertissement haptique, l'assistance à la conduite dynamique et le stationnement automatique de sangle.

10. Ensemble rétracteur (30) selon l'une quelconque des revendications précédentes, dans lequel chaque premier limiteur de charge comprend une barre de torsion (54) dans la transmission entre l'enrouleur de sangle (48a, 48b) respectif et l'arbre intermédiaire.

11. Ensemble rétracteur (30) selon la revendication 10, dans lequel chaque enrouleur de sangle (48a, 48b) est relié à rotation rapide à une première extrémité de son limiteur de charge de barre de torsion (54) respectif.

12. Ensemble rétracteur (30) selon la revendication 11, dans lequel ledit au moins un mécanisme de verrouillage (60) fonctionne pour accoupler sélectivement une seconde extrémité d'un limiteur de charge de barre de torsion respectif des limiteurs de charge de barre de torsion (54) à l'arbre intermédiaire (44).

13. Ensemble rétracteur (30) selon la revendication 12 lorsqu'elle dépend de la revendication 2, dans lequel chacun desdits mécanismes de verrouillage (60) fonctionne pour accoupler sélectivement une seconde extrémité d'un limiteur de charge de barre de torsion respectif des limiteurs de charge de barre de torsion (54) à l'arbre intermédiaire (44).

14. Ensemble rétracteur (30) selon la revendication 12 lorsqu'elle dépend de la revendication 3, dans lequel ledit mécanisme de verrouillage (60) fonctionne pour accoupler sélectivement une seconde extrémité de l'un des limiteurs de charge de barre de torsion (54) à l'arbre intermédiaire (44), la seconde extrémité de l'autre des limiteurs de charge de barre de torsion (54) étant accouplée en permanence à l'arbre intermédiaire (44).

15. Système de retenue d'occupant pour un siège d'automobile comprenant un ensemble rétracteur (30) selon l'une quelconque des revendications précédentes et des première et seconde sangles d'épaule flexibles (32a, 32b), une région d'extrémité de chacune des première et seconde sangles d'épaule étant reliée à un enrouleur respectif des premier et second enrouleurs de sangle (48a, 48b).

16. Véhicule comportant un ensemble rétracteur (30) de harnais de sangle d'épaule double selon l'une quelconque des revendications 1 à 14 ; ou un système de retenue d'occupant selon la revendication 15.
